# EUROPEAN PATENT APPLICATION

(11) **EP 3 816 026 A1**
(43) Date of publication of application: **05.05.2021**
(21) Application number: 20194993.0
(22) Date of filing: 08.09.2020
(51) Int. Cl.: B62J 3/00, B60Q 5/00

(54) **STRUCTURE OF POWER UNIT SOUNDING EMULATOR ARRANGEMENT OF VEHICLE**

(30) Priority: 31.10.2019 TW 108214400 U
(71) Applicant: Kwang Yang Motor Co., Ltd., Kaohsiung City (TW)
(72) Inventor: TSAI, FENG-CHIH, KAOHSIUNG CITY (TW)
(74) Representative: Horak, Michael

(57) **Abstract**

The present invention relates to a structure of a power unit sounding emulator arrangement of a vehicle. The vehicle includes a vehicle frame unit (3). The vehicle frame unit (3) is provided thereon with a power unit (P) and a seat cushion (5). Side vehicle body covers (C1) are provided at a lower side of the seat cushion (5). The side vehicle body covers (C1) are provided with a hole (C11). A power unit sounding emulator (6) is provided at a lower side of the seat cushion (5). The power unit sounding emulator (6) includes sound exit ports (621). The sound exit ports (621) are arranged to incline downward to two, leftward and rightward, sides in a width direction of the vehicle body. The side vehicle body covers (C1) cover the power unit sounding emulator (6) at the two, leftward and rightward, sides in the width direction of the vehicle. A sound generated by the power unit sounding emulator (6) is transmittable out through the hole (C11). As such, the sound generated by the power unit sounding emulator (6) is transmitted, in a manner of being not blocked, from the sound exit ports (621) through the hole (C11), toward width leftward and rightward directions of the vehicle body so as to ensure the volume of the sound generated by the power unit sounding emulator (6) will not diminish.

## Description

### TECHNICAL FIELD OF THE INVENTION

The present invention relates to a structure of a power unit sounding emulator arrangement of a vehicle, and more particularly to a structure of a power unit sounding emulator arrangement of a vehicle that prevents a volume of sounding generated by a power unit sounding emulator from diminishing.

### DESCRIPTION OF THE PRIOR ART

A power unit of a vehicle is commonly realized in the form of an internal combustion engine. However, due to the increasingly serious issue of air pollution, the power source of transportation is increasingly substituted by electric motorcycles in order to reduce sources of pollution. The internal combustion engine-based power unit relies on combustion and explosion of fuel to generate power, and as such, an engine operation sound is generated during the combustion and explosion and also emission of exhaust. Such an engine operation sound is often taken as noise or a sounding alarm for vehicles in operation. The electric motorcycles rely on the operation of electric motors to gain power. The operation of the electric motor has a reduced level of sounding. This, although reducing the level of noise, also reduces the alarm sounding of vehicles in operation. Consequentially, electric vehicle manufacturers often intend to provide, on an electric vehicle, means for emulation of operation sounding of an internal combustion engine to, on the one hand, improve operation safety of the vehicle, and, on the other hand, enhance performance of sale of the electric vehicle.

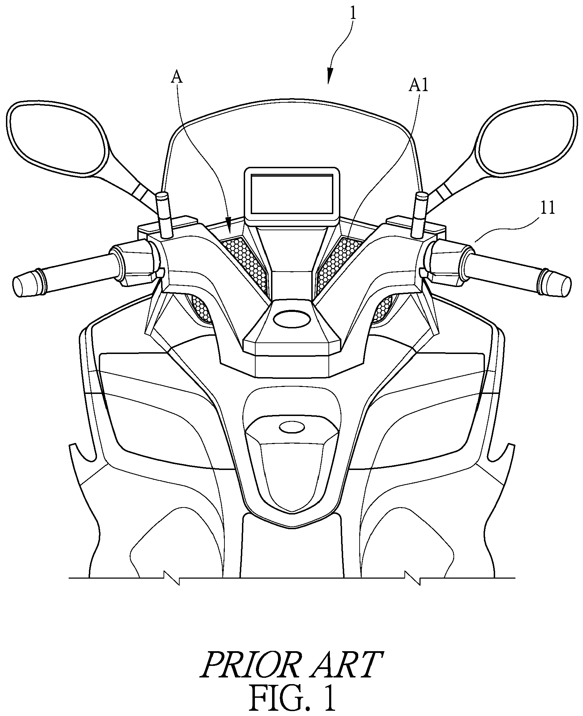

As shown in FIG. 1, a motorcycle 1 is provided with a speaker A mounted thereon. The speaker A is generally for the purpose of playing music during the riding of a rider. The speaker A is often arranged at a location in front of a steering mechanism 11 of the motorcycle 1, so that sounds generated by the speaker A can transmit music in a direction toward the rider, allowing the rider to listen to the music during riding.

The above-described arrangement of the speaker A allows the rider to listen to music; however, the structure of arrangement of the speaker A makes it easy for the speaker A to be corroded by external moisture, eventually causing damage of the speaker A. On the other hand, the speaker A is arranged to face the rider, and consequently, transmission of sound to pedestrians on the left and right sides of the motorcycle 1 or other vehicles is bad. Apparently, the structure of the conventional arrangement of the speaker A on the motorcycle 1 is not applicable to electric vehicles.

Thus, it is a challenge for the electric vehicle manufacturers to provide a structure of a power unit sounding emulator arrangement of a vehicle that improves an alarming effect of operation of an electric vehicle.

### SUMMARY OF THE INVENTION

The primary objective of the present invention is to provide a structure of a power unit sounding emulator arrangement of a vehicle, wherein an alarming effect of operation of an electric motorcycle or a unique, brand-distinguishing sounding effect that catches attention can be achieved by arranging a power unit sounding emulator on the electric motorcycle. Also, by using the power unit sounding emulator to emulate sounding of exhaust generated by an exhaust pipe of a fuel-combusting engine, interesting and fun of riding an electric motorcycle are enhanced. The power unit sounding emulator of the present invention can also be used in a motorcycle involving a fuel-combusting engine in order to provide variability of sounding of exhaust generated by the exhaust pipe of the fuel-combusting engine motorcycle for enhancing interesting and fun of riding a fuel-combusting engine motorcycle.

For such a purpose, a primary technical solution of the present invention according to claim 1 is to provide a structure of a power unit sounding emulator arrangement of a vehicle. The vehicle comprises a vehicle frame unit. The vehicle frame unit is provided thereon with a power unit and a seat cushion. Side vehicle body covers are provided at a lower side of the seat cushion. The side vehicle body covers (C1) are provided with a hole. A power unit sounding emulator is provided at a lower side of the seat cushion. The power unit sounding emulator comprises sound exit ports. The sound exit ports re arranged to incline downward to two, leftward and rightward, sides in a vehicle body width direction. The side vehicle body covers are arranged to cover the power unit sounding emulator at the two, leftward and rightward, sides in the vehicle body width direction. A sound generated by the power unit sounding emulator is transmittable out through the hole. As such, the sound generated by the power unit sounding emulator is transmitted, in a manner of being not blocked, from the sound exit ports through the hole, toward width leftward and rightward directions of the vehicle body so as to ensure the volume of the sound generated by the power unit sounding emulator will not diminish.

The efficacy that the present invention may achieve by means of the primary technical solution of claim 1 is that the sound generated by the power unit sounding emulator is transmitted, in a manner of being not blocked, from the sound exit ports through the hole, toward width leftward and rightward directions of the vehicle body so as to ensure the volume of the sound generated by the power unit sounding emulator will not diminish.

### BRIEF DESCRIPTION OF THE DRAWINGS

FIG. 1 is a schematic view showing a conventional arrangement of a speaker on a vehicle.
FIG. 2 is a perspective view showing an electric motorcycle according to the present invention.
FIG. 3 is a perspective view showing an arrangement of a power unit sounding emulator according to the present invention.
FIG. 4 is a front view showing the arrangement of the power unit sounding emulator according to the present invention
FIG. 5 is a schematic view illustrating an arrangement of the power unit sounding emulator and holes of a side vehicle body cover according to the present invention.
FIG. 6 is a schematic view illustrating the arrangement of the power unit sounding emulator according to the present invention and a movement of a rider.

### DETAILED DESCRIPTION OF THE PREFERRED EMBODIMENT

For better understanding of the structure of the present invention and the efficacy that can be achieved thereby, a detail description will be provided below, with reference to the attached drawings.

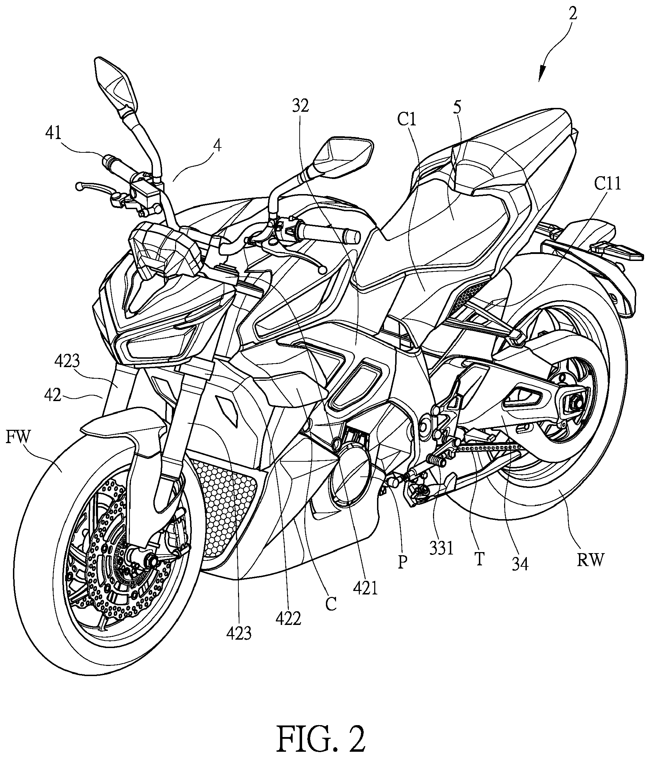

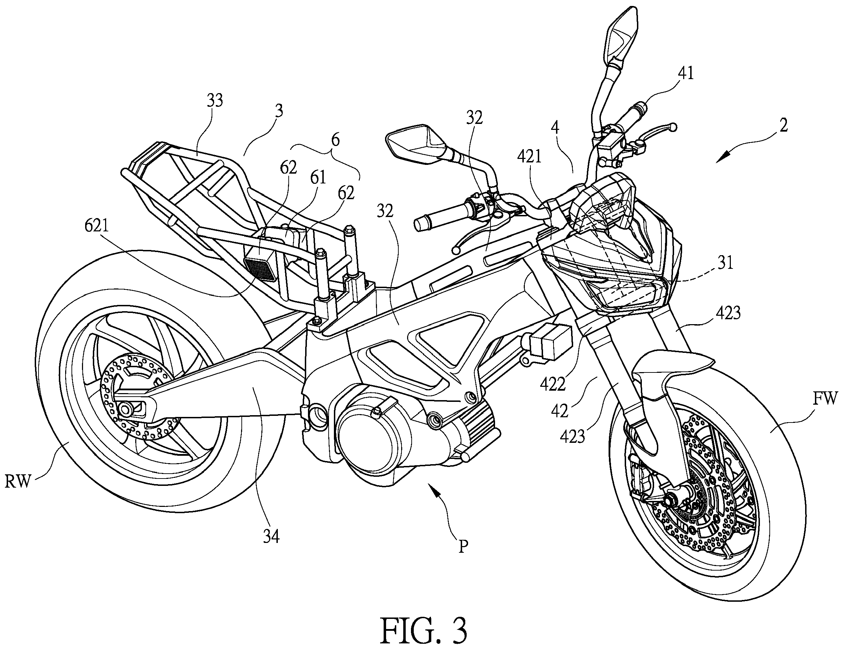

Firstly, as shown in FIGS. 2 and 3, it is first noted here that a vehicle according to the present invention refers to an electric motorcycle. The electric motorcycle 2 at least comprises a vehicle frame unit 3. The vehicle frame unit 3 at least comprises, in a direction toward a front of a vehicle body, a head tube portion 31. The head tube 31 is extended, in a direction toward a rear of the vehicle body and inclining downward, a pair of extension portions 32 arranged in a left-and-right pairwise form. The extension portions 32 are extended in a direction toward an upper side of the rear side of the vehicle body to form a pair of rear vehicle frame portions 33 arranged in a left-and-right pairwise form. Provided in a rotatable manner at a lower side of the rear side of the extension portions 32 is a rear rocking arm assembly 34, and provided at a location at a rear end of the extension portions 32 and a front end of the rear vehicle frame portions 33 is a power unit P. The power unit P of the electric motorcycle 2 is an electric motor, and the power unit P drives, by means of a transmission member T, a rear wheel RW rotatably arranged at a rear end of the rear rocking arm assembly 34. The extension portions 32 at the rear side of the head tube portion 31 is provided, in a direction toward the front side of the vehicle body, with an outer decoration cover C and is covered thereby.

As shown in FIGS. 2 and 3, the head tube portion 31 of the vehicle frame unit 3 is provided thereon with a steering mechanism 4 for changing a direction of travel of the electric motorcycle 2. The steering mechanism 4 at least comprises a steering handlebar 41 extending in leftward and rightward directions of the vehicle body and a front fork assembly 42 arranged upward and downward of the vehicle body. The front fork assembly 42 includes a top bridge portion 421, a bottom bridge portion 422, and a pair of front shock absorbers 423 arranged in a left-and-right pairwise form. The top bridge portion 421 is located above the head tube portion 31, the bottom bridge portion 422 is located below the head tube portion 31, meaning the head tube portion 31 is arranged between the top bridge portion 421 and the bottom bridge portion 422. The front shock absorbers 423 are arranged as being extended from the top bridge portion 421, through the bottom bridge portion 422, toward a lower side of the vehicle body. The front shock absorbers 423 are provided, at a lower end thereof, with a front wheel FW of the electric motorcycle 2 mounted thereto in a rotatable manner. The steering handlebar 41 is connected to a top side of the top bridge portion 421.

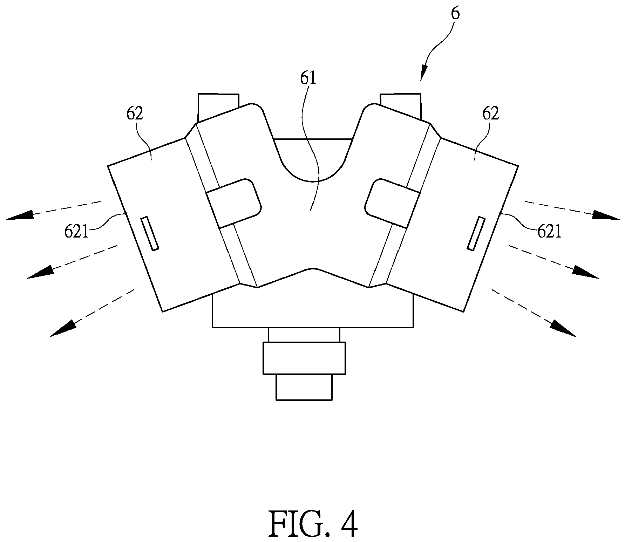

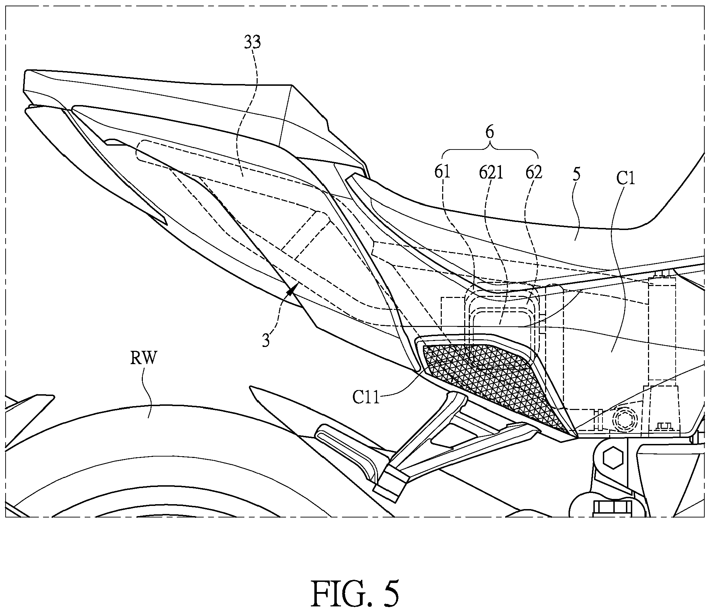

As shown in FIGS. 3, 4, and 5, the rear vehicle frame portions 33 of the vehicle frame unit 3 is provided, in a direction toward an upper side of the vehicle body, with a seat cushion 5 that is provided for a rider to sit thereon. The extension portions 32 of the vehicle frame unit 3 are provided, in a direction toward the rear side of the vehicle body and at two sides of the vehicle body, with front tread boards 331 that are provided for supporting the feet during riding. The seat cushion 5 is provided, at the two, leftward and rightward, sides of the vehicle body in a direction toward the lower side of the vehicle body, with and covered by side vehicle body covers C1. The side vehicle body covers C1 are provided, in a direction toward the lower side of the rear side of the vehicle body, with at least one hole C11. In an embodiment of the present invention, the at least one hole C11 includes multiple holes. The rear vehicle frame portions 33 are provided, at a location close to a center of an interior thereof, with a power unit sounding emulator 6 that is operable to emulate an engine operation sound of an internal combustion engine, and more specifically, the power unit sounding emulator 6 is surrounded, around a periphery thereof, by the rear vehicle frame portions 33, and the side vehicle body covers C1 cover the power unit sounding emulator 6 at two, leftward and rightward, sides in a width direction of the electric motorcycle 2, and as being viewed sideways, the front tread boards 331 are located at a front side of the power unit sounding emulator 6 and the hole C11, and the front tread board 331 is located even more frontward of the power unit sounding emulator 6 and the hole C11 in a direction towards the front side of the vehicle body.

As shown in FIGS. 3, 4, and 5, the power unit sounding emulator 6 includes a main body portion 61 and sound speaker portions 62 extending, in an oblique manner, from two opposite sides of the main body portion 61 toward width leftward and rightward directions of the vehicle body. The sound speaker portions 62 each include a sound exit port 621, and the sound exit port 621 is arranged in a manner of inclining toward the lower side of the vehicle body, so as to prevent external moisture from passing through the sound exit port 621 to enter an interior of the sound speaker portion 62 to cause corrosion of the power unit sounding emulator 6. The hole C11 of the side vehicle body cover C1 is arranged slightly lower than the sound exit port 621 in an up-down direction of the vehicle body, in order to prevent external moisture from passing through the hole C11 to enter and corrode the power unit sounding emulator 6, and also to allow sounds generated by the power unit sounding emulator 6 to transmit, through the sound exit port 621 of the sound speaker portion 62, by way of the hole C11 to the outside in the width leftward and rightward directions of the vehicle body, this ensuring the sounds generated by the power unit sounding emulator 6 can be smoothly transmitted out without being blocked by the side vehicle body covers C1.

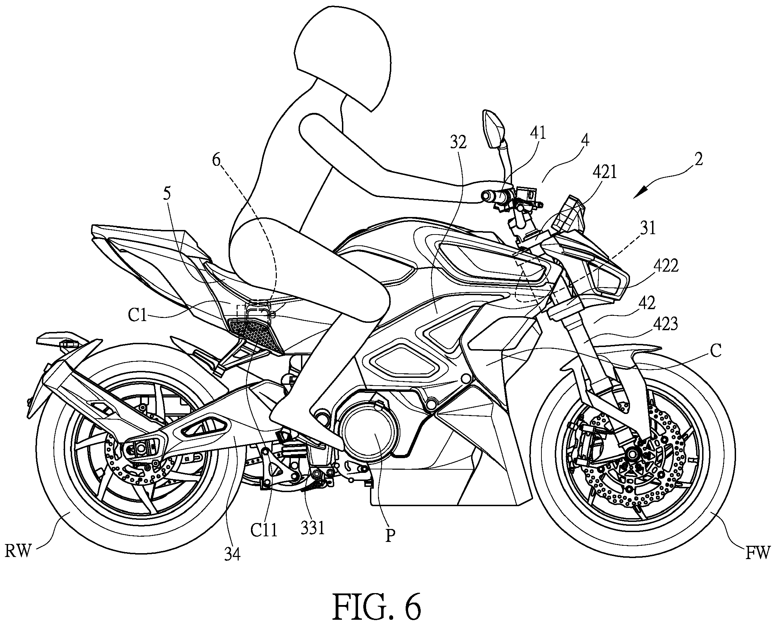

As shown in FIGS. 2, 3, 5, and 6, the power unit sounding emulator 6 is arranged below the seat cushion 5. When the rider sits down on the seat cushion 5, the sound exit ports 621 of the sound speaker portions 62 and the holes C11 of the side vehicle body covers C1 are located at a rear side of the shanks below the hips of the rider, so that the sounds generated by the power unit sounding emulator 6 are not blocked by the legs and feet of the rider, meaning the sounds generated by the power unit sounding emulator 6 can be transmitted, through the sound exit ports 621 of the sound speaker portions 62, by way of the holes C11 to the outside in the width leftward and rightward directions of the vehicle body, this ensuring the volume of the sound generated by the power unit sounding emulator 6 will not be decreased or diminished.

A primary efficacy of the present invention is that the vehicle includes a vehicle frame unit 3, the vehicle frame unit 3 being provided with a power unit P and a seat cushion 5, the seat cushion 5 being provided at a lower side thereof with side vehicle body covers C1, the side vehicle body covers C1 being provided with holes C11, the seat cushion 5 being provided, at a lower side thereof, with a power unit sounding emulator 6, the power unit sounding emulator 6 including sound exit ports 621, the sound exit ports 621 being arranged to incline downward to two, leftward and rightward, sides in a width direction of the vehicle body, the side vehicle body covers C1 covering, at the two, leftward and rightward, sides of the width direction of the vehicle, the power unit sounding emulator 6, the power unit sounding emulator 6 generating a sound that is transmitted out through the holes C11, wherein the sound generated by the power unit sounding emulator 6 is transmitted, in a manner of being not blocked, from the sound exit ports 621 through the holes C11, toward width leftward and rightward directions of the vehicle body so as to ensure the volume of the sound generated by the power unit sounding emulator 6 will not diminish.

A second efficacy of the present invention is that the holes C11 are arranged as multiple holes and the multiple holes C11 are slightly lower than the sound exit ports 621 in an up-down direction of the vehicle body, wherein external moisture is prevented from passing through the holes C11 to enter the interior to cause corrosion of the power unit sounding emulator 6, so as to improve the utilization of the power unit sounding emulator 6.

A third efficacy of the present invention is that the vehicle frame unit 3 is provided with front tread boards 331 for supporting feet of a rider, and as viewed sideways, the front tread boards 331 are located at a front side of the power unit sounding emulator 6, wherein the sound generated by the power unit sounding emulator 6 is not blocked by the legs and feet of the rider, meaning the sound generated by the power unit sounding emulator 6 is transmitted, in a manner of being not blocked, from the sound exit ports 621 of the sound speaker portions 62 through the holes C11, toward width leftward and rightward directions of the vehicle body so as to ensure the volume of the sound generated by the power unit sounding emulator 6 will not diminish.

A fourth efficacy of the present invention is that the vehicle frame unit 3 is provided with rear vehicle frame portions 33, the power unit sounding emulator 6 being surrounded, at a periphery thereof, by the rear vehicle frame portions 33, wherein the power unit sounding emulator 6 is protected by the rear vehicle frame portions 33 to prevent the power unit sounding emulator 6 from being pressed or hit to damage thereby ensuring the utilization of the power unit sounding emulator 6.

A fifth efficacy of the present invention is that when a rider sit down on the seat cushion 5, the power unit sounding emulator 6 and the holes C11 are located at a lower side of the hips of the rider and at a rear side of the shanks, wherein the sound generated by the power unit sounding emulator 6 is not blocked by the legs and feet of the rider, meaning the sound generated by the power unit sounding emulator 6 is transmitted, in a manner of being not blocked, from the sound exit ports 621 of the sound speaker portions 62 through the holes C11, toward width leftward and rightward directions of the vehicle body so as to ensure the volume of the sound generated by the power unit sounding emulator 6 will not diminish.

A sixth efficacy of the present invention is that the power unit sounding emulator 6 includes a main body portion 61 and sound speaker portions 62 extending, in an oblique manner, from two opposite sides of the main body portion 61 toward width leftward and rightward directions of the vehicle body, the sound speaker portions 62 each including a sound exit port 621, the sound exit port 621 being arranged in a manner of inclining toward a lower side of the vehicle body, wherein external moisture is prevented from passing through the sound exit port 621 to enter an interior of the sound speaker portion 62 to corrode the power unit sounding emulator 6, thereby enhancing utilization of the power unit sounding emulator 6.

In summary, the present invention, by means of the above structure, can effectively improve the drawbacks of the prior art and achieves the purpose as desired and surely achieve better performance than the prior art and thus involving novelty, inventive step, and utilization, which are required for granting a patent, and as such, a patent application is filed herewith for appealing the granting of a patent.

## Claims

1. A structure of a power unit sounding emulator arrangement of a vehicle, the vehicle comprising a vehicle frame unit (3), the vehicle frame unit (3) being provided thereon with a power unit (P) and a seat cushion (5), side vehicle body covers (C1) being provided at a lower side of the seat cushion (5), the side vehicle body covers (C1) being provided with a hole (C11), **characterized in that** a power unit sounding emulator (6) is provided at a lower side of the seat cushion (5), the power unit sounding emulator (6) comprising sound exit ports (621), the sound exit ports (621) being arranged to incline downward to two, leftward and rightward, sides in a vehicle body width direction, the side vehicle body covers (C1) covering the power unit sounding emulator (6) at the two, leftward and rightward, sides in the vehicle body width direction, a sound generated by the power unit sounding emulator (6) being transmittable out through the hole (C11).

2. The structure of the power unit sounding emulator arrangement of the vehicle according to claim 1, wherein the hole (C11) is arranged as multiple holes (C11), the multiple holes (C11) are slightly lower than the sound exit ports (621) in vehicle body up-down direction.

3. The structure of the power unit sounding emulator arrangement of the vehicle according to claim 1, wherein the vehicle frame unit (3) is provided with front tread boards (331) for supporting feet of a rider, and as viewed sideways, the front tread boards (331) are located at a front side of the power unit sounding emulator (6).

4. The structure of the power unit sounding emulator arrangement of the vehicle according to claim 1 or 3, wherein the vehicle frame unit (3) is provided with rear vehicle frame portions (33), and the power unit sounding emulator (6) is surrounded, at a periphery thereof, by the rear vehicle frame portions (33).

5. The structure of the power unit sounding emulator arrangement of the vehicle according to claim 3, wherein a rider sits on the seat cushion (5), the power unit sounding emulator (6) and the hole (C11) are located at a lower side of the hips of the rider and at a rear side of the shanks.

6. The structure of the power unit sounding emulator arrangement of the vehicle according to claim 1, 3, or 5, wherein the power unit sounding emulator (6) includes a main body portion (61) and sound speaker portions (62) extending, in an oblique manner, from two opposite sides of the main body portion (61) toward vehicle body width leftward and rightward directions, the sound speaker portions (62) each comprising a sound exit port (621), the sound exit port (621) being arranged in a manner of inclining toward a lower side of the vehicle body.
